Europäisches Patentamt

European Patent Office

Office européen des brevets

(11) Veröffentlichungsnummer: **0 252 132 B1**

## (12) EUROPÄISCHE PATENTSCHRIFT

(45) Veröffentlichungstag der Patentschrift: **30.09.92**

(21) Anmeldenummer: **87900631.0**

(22) Anmeldetag: **15.01.87**

(86) Internationale Anmeldenummer:
**PCT/CH87/00004**

(87) Internationale Veröffentlichungsnummer:
**WO 87/04366 (30.07.87 87/17)**

(51) Int. Cl.5: **B01D 53/34**

(54) **RAUCHGASENTGIFTUNGSANLAGE.**

(30) Priorität: **16.01.86 CH 148/86**

(43) Veröffentlichungstag der Anmeldung:
**13.01.88 Patentblatt 88/02**

(45) Bekanntmachung des Hinweises auf die
Patenterteilung:
**30.09.92 Patentblatt 92/40**

(84) Benannte Vertragsstaaten:
**AT BE CH DE FR GB IT LI LU NL SE**

(56) Entgegenhaltungen:
**DE-A- 2 415 693**
**US-A- 4 294 807**

(73) Patentinhaber: **MAAG, Anton**
**Mundaditsch Brambrüesch**
**CH-7074 Malix (Chur)(CH)**

(72) Erfinder: **Maag, Anton**
**Mundaditsch Brambrüesch**
**CH-7074 Malix (Chur)(CH)**
Erfinder: **Hälg, Robert**
**Vordere Gasse 41**
**CH-7012 Felsberg(CH)**

**Beschreibung**

Die vorliegende Erfindung betrifft eine Rauchgasentgiftungsanlage, die insbesondere für die Entgiftung von Rauchgasen von Feuerungen für Heizzwecke nützlich ist.

Zum Waschen von Rauchgasen ist es seit langem bekannt alkalische Lösungen zu verwenden, da solche wesentlich wirksamer sind als neutrale Lösungen. Bei der industriellen Anwendung werden Basen, wie Natronlauge, Ammoniak, Lösungen von Alkalisalzen, von schwachen anorganischen oder organischen Säuren, wie Natriumcarbonat oder Citrat, und aliphatische oder aromatische Amine verwendet.

Es ist ebenfalls bekannt, solche Verfahren kontinuierlich unter Verwendung eines Waschlösungskreislaufs durchzuführen (Ullmanns Enzyklopädie der technischen Chemie, Bd. 21, S.58-59, Verlag Chemie Weinheim (1982)). Die hier beschriebenen Verfahren sind verhältnismässig kompliziert und bedürfen daher einer sorgfältigen Wartung. Sie sind demzufolge nicht für den Einsatz in ein Einfamilienhaus oder einem anderen Wohnhaus geeignet.

In der DE-A-24 15 693 wird ein Verfahren zur Reinigung speziell industrieller Rauchgase mit einer Waschflüssigkeit aus Kalziumkarbonat und/oder Kalziumhydroxyd beschrieben, der zusätzlich Kalziumoxyd und Chlor-Ionen zudosiert werden müssen, wobei zur optimalen Durchführung ein enger pH-Bereich einzuhalten ist. Dieses Verfahren ist apparativ aufwendig und schafftwegen des eingeführten Chlors Entsorgungsprobleme.

Die zunehmende Luftverschmutzung in den Industriestaaten führte in den letzten Jahren vermehrt zu Umweltschäden. Es werden deshalb Massnahmen gefordert, um die Abgase bei der Verbrennung von fossilen Brennstoffen möglichst unschädlich zu machen. Eine der Verschmutzungsquellen für die Luft sind die zahlreichen Oelfeuerungen für die Beheizung von Wohnhäusern. Da das Heizöl in der Regel Schwefel enthält, enthalten die Abgase ebenfalls Schwefeloxide, welche zu saurem Regen führen können. Es besteht demzufolge ein starkes Bedürfnis nach Rauchgasentgiftungsanlagen für kleinere Heizeinrichtungen, wie sie in Wohnhäusern sehr verbreitet sind. Eine solche Rauchgasentgiftungsanlage sollte technisch einfach, billig in der Anschaffung und im Unterhalt, sowie einfach in der Wartung sein. Ueberdies sollte sie ein leicht zu entsorgendes und nicht umweltgefährdendes Abfallprodukt erzeugen. Diese Anforderungen werden von der erfindungsgemässen Rauchgasentgiftungsanlage erfüllt.

Gegenstand der vorliegenden Erfindung ist demzufolge der im Patentanspruch 1 definierte Gegenstand.

Die erfindungsgemässe Rauchgasentgiftungsanlage macht das schwefeloxidhaltige Rauchgas durch Besprühen mit einer Calciumhydroxidlauge unschädlich, indem die schädlichen Gase durch die Waschlösung absorbiert werden. In der Lösung bildet sich vorerst Calciumsulfit, welches dann durch den Luftsauerstoff in Calciumsulfat umgewandelt wird. Das schwerlösliche Calciumsulfat bildet in der Lösung einen Niederschlag. Dieser Niederschlag bildet im Aufbereitungsteil, in welchen die Waschlösung wieder zurückgeführt wird, ein Sediment, welches von Zeit zu Zeit durch ein Ablassventil aus dem System entfernt werden kann. In der Umgebung der Sprühdüse kann ein Einsatz aus Eisen, z.B. ein Lochblech, vorhanden sein, aus welchem die Waschlauge spurenweise Eisenionen herauslöst. Es wurde nun festgestellt, dass durch die Berieselung des Rauchgases mit der Calciumhydroxidlösung ebenfalls nitrose Gase gelöst werden. Durch die Gegenwart von Eisenionen werden die normalerweise leicht löslichen Nitrit- oder Nitrationen, welche sich aus den nitrosen Gasen bilden, ebenfalls mit dem Niederschlag ausgeschieden.

Aufgrund einer genügenden Weite der Rücklaufleitung von der Waschzone in den Aufbereitungsteil kommt die verbrauchte Waschlösung mit dem Luftsauerstoff in Kontakt. Dadurch werden die gebildeten Sulfite zu Sulfaten oxidiert.

Es ist vorteilhaft, die Berieserlungsanlage für die Rauchgase überdach anzuordnen. Diese Anordnung hat den Vorteil, dass dabei in der Regel keine Versottung des Kamins, d.h. keine Durchdringung des Mauerwerkes mit Teerausscheidungen stattfindet, was eine Schonung des Kamins bedeutet. Weitere Vorteile sind, dass kein Aufheizen der Rauchgase erforderlich ist, dass keine feuchten Rauchgase austreten und dass für den Auftrieb keine Ventilation notwendig ist.

Als Rohstoff für die Aufbereitung der Waschlauge wird gebrannter Kalk verwendet. Die Zugabe des gebrannten Kalkes in das Aufbereitungsgefäss kann beispielsweise durch Steuerung mittels einer pH-Sonde erfolgen. Die beim Löschen des gebrannten Kalkes freigesetzte Energie muss aus dem Reaktionsgefäss abgeführt werden. Dies kann durch Kühlung mittels einer Kühlwendel geschehen, wobei die Kühlung automatisch in Gang gesetzt wird, wenn die Temperatur im Reaktionsgefäss einen bestimmten Wert überschreitet. Diese Kühlwendel kann gleichzeitig als Vorlauf für einen Boiler dienen. Dabei kann die Energie, welche teils beim Löschen des gebrannten Kalkes freigesetzt wird und welche teils von der Kaminabluft auf die Waschlösung übertragen wird, zurückgewonnen werden.

Der beim Betrieb durch den Niederschlag gebildete Schlamm wird von Zeit zu Zeit durch ein Ablassventil abgelassen. Dabei kann der Schlamm direkt in ein Gefäss oder einen Sack zur Entsorgung eingeleitet werden. Das Ablassen des Schlammes kann entweder in Form einer Unterhaltsarbeit von Zeit zu Zeit erfolgen, wobei ein Schauglas eine Kontrolle erlaubt, oder es kann auch automatisiert werden, indem eine Dichtemesssonde im unteren Teil des Regenerationsgefässes das Ablassventil steuert.

Die erfindungsgemässe Rauchgasentgiftungsanlage, die einen im wesentlichen geschlossenen Kreislauf besitzt, erfordert nur wenige Wartungsarbeiten. Diese bestehen hauptsächlich darin, dass der verbrauchte gebrannte Kalk ersetzt werden muss, der gebildete Schlamm aus dem System entfernt und einer Deponie zugeführt werden muss. Der in einen Behälter abgelassene und ausgetrocknete Schlamm kann ohne Umweltbelastung einer Deponie zugeführt werden.

Dadurch ist leicht ersichtlich, dass die kompakte Anlage sehr servicefreundlich ist und mit geringen Betriebskosten betrieben werden kann. Sie eignet sich somit besonders für Wohn- und Geschäftshäuser.

Durch den drucklosen Betrieb der Anlage wird die Heizleistung nicht beeinträchtigt.

Als Material für die Herstellung der Anlage muss ein laugenfester Werkstoff verwendet werden. Beispielsweise rostfreie Stähle oder Kunststoffe.

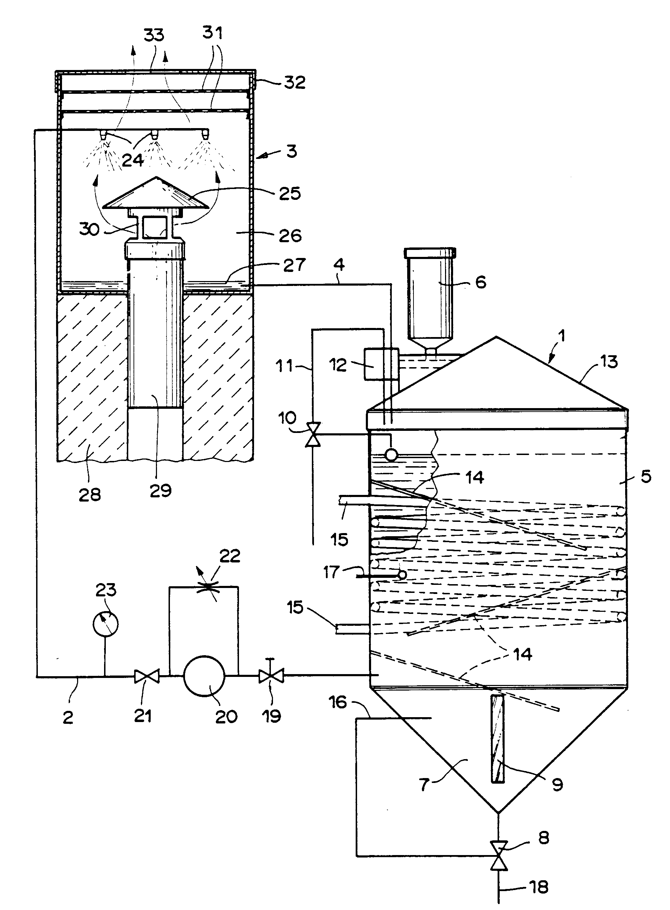

Im folgenden wird die Erfindung anhand einer lediglich eine Ausführungsform darstellenden Zeichnung näher erläutert. Die Figur zeigt das Schema einer erfindungsgemässen Rauchgasentgiftungsanlage.

Die Figur zeigt eine Rauchgasentgiftungsanlage mit einer Aufbereitungsvorrichtung (1). Diese Vorrichtung besteht aus einem Reaktionsgefäss (5), welches unten eine trichterförmige Schlammwanne (7) aufweist mit einem Ablassventil (8) und einer Ablassleitung (18), von wo der abgelassene Schlamm für die Entsorgung in ein Gefäss eingeleitet werden kann. Zur Sichtkontrolle weist die Schlammwanne ein Schauglas (9) auf. Ebenfalls ist eine Dichtemesssonde (16) vorhanden, durch welche das Ventil (8) gesteuert wird. Oben ist das Gefäss (5) durch einen Deckel (13) abgeschlossen. Ueber diesem Deckel ist ein Vorratsgefäss (6) für gebrannten Kalk angeordnet. Eine Dosierungseinrichtung (12) sorgt für Einführung des gebrannten Kalkes in das Reaktionsgefäss (5). Die Fördereinrichtung wird durch eine pH-Messsonde (17) gesteuert. Weiter ist noch ein Schwimmerventil (10) vorhanden, durch welches die Frischwasserzufuhr gesteuert wird. Das durch Verdampfen oder Ablassen des Schlammes verlorene Wasser wird automatisch, z.B. durch ein Magnetventil, welches durch einen Schwimmer gesteuert wird, über die Frischwasserleitung (11) wieder ersetzt. Innerhalb des Reaktionsgefässes (5) befinden sich Mischbleche (14), die einer Durchmischung der Waschlauge dienen. Zur Abführung der durch das Löschen des Kalkes gebildeten Wärme ist eine Kühlwendel (15) im Reaktionsgefäss (5) angeordnet. Oberhalb der Schlammwanne (7) wird die Vorlaufleitung (2) weggeleitet, welche über ein Vorlaufventil (19) einer motorgetriebenen Pumpe (20) zugeführt wird. Ebenfalls gezeigt wird das Rückschlagventil (21), das Drosselventil (22) und das Manometer (23).

Die Vorlaufleitung (2) führt in die Sprühdüsen (24) im Gaswaschraum (26) der Rauchwaschzone (3). Das Rauchgas wird durch den Kamin (28) über das Rohr (29), welches mit einer Sprühhaube (25) versehen wird, in den Gaswaschraum eingeleitet. Die Sprühhaube (25) verhindert, dass Waschlauge in die Kaminöffnung eindringt. Die Sprühhaube ist mittels des Aufsatzes (30) an das Rohr (29) befestigt. Der Aufsatz (30) erlaubt den ungehinderten Durchtritt des Rauchgases. Ueber den Düsen (24) sind zwei Lochsiebe aus Eisen angeordnet, durch welche die Waschlauge mit Eisenionen versorgt wird. Die Rauchwaschzone wird mit dem Deckel (32), welcher eine Oeffnung (33) aufweist, versehen. Die durch die Düsen (24) versprühte Waschlauge wird durch die Wanne (27) aufgefangen. Von dieser Wanne führt die Leitung (4), welche eine genügende Weite aufweist, damit die Waschlösung mit dem Luftsauerstoff in Kontakt gebracht wird, wiederum in den Kessel (5) zurück. Beim Zurückfliessen der Calciumhydroxidlauge mit den absorbierten Schadstoffen werden die letzteren mindestens teilweise durch den Luftsauerstoff oxidiert. So entstehen beispielsweise aus Sulfitionen Sulfationen, welche sich dann in Form von Calciumsulfat (Gips) niederschlagen. Der gebildete Niederschlag wird schliesslich in der Schlammwanne (7) sedimentiert und dann von Zeit zu Zeit abgelassen. Das während diesem Vorgang verlorene Wasser und ebenfalls das dem ausgeschiedenen Calciumsulfat entsprechende Calcium wird durch Frischwasser bzw. CaO kontinuierlich ersetzt.

Der Niederschlag zeigte folgende Analysewerte:

| Trockenrückstand | 89 Gew.% |
|---|---|
| Glührückstand | 66,3 Gew.% d. Trockensubstanz |
| Sulfat $(SO_4^{-2})$ | 129,3 g/kg |
| Sulfit $(SO_3^{-2})$ | 3,2 g/kg |
| Calcium $(Ca^{2+})$ | 310 g/kg |
| Magnesium $(Mg^{2+})$ | 8 g/kg |
| Eisen $(Fe^{3+})$ | 33 g/kg |
| Carbonat $(CO_3^{-2})$ | 380 g/kg |
| Säureunlösl.Anteil | 7 g/kg |
| Blei | <25 mg/kg |
| Cadmium | <15 mg/kg |

Der Niederschlag besteht zur Hauptsache (63,3 Gew.%) aus Calciumcarbonat (Kalk), zu 18,3 Gew.% aus Calciumsulfat (Gips), zu 4,7 Gew.% aus Eisenoxiden und zu 11 Gew.% aus Wasser. Der Rückstand ist in Wasser wenig löslich. Lässt man 10 g Rückstand in 1 1 entionisiertem Wasser über Nacht stehen, so gehen 0,95 g in Lösung. Fügt man zum Rest nochmals 1 l Wasser hinzu, so gehen noch 0,29 g in Lösung. Der lösliche Anteil besteht aus Gips. Da im Rückstand zudem keine toxischen Metalle (Pb,Cd) nachweisbar waren, sollte der Rückstand auf einer Deponie entsorgt werden können.

Eine weitere Laboruntersuchung des Vorlaufs, des Nachlaufs und des Schlamms zeigte folgende Ergebnisse:

| Bezeichnung | Vorlauf | Nachlauf | Schlamm |
|---|---|---|---|
| pH-Wert | 11,8 | 6,8 | 11,8 |
| Nitrit (mg/l) | 0,8 | 1,0 | |
| Nitrat (mg/l) | 4,6 | 4,9 | |
| Sulfit (mg/l) | 6,4 | 0,1 | |
| Sulfat (mg/l) | 1078 | 1510 | |
| Carbonat (mg/l) | 117 | 0 | |
| Bicarbonat (mg/l) | 0 | 219 | |
| Chlorid (mg/l) | 55 | 55 | |
| Erdalkalien (mg Ca/l) | 652 | 720 | |
| Lauge (mVal/l) | 4,8 | 0 | |
| Rückstand (mg/l) | 387 | 26,8 | 2111 |
| Carbonat Gew.% | | | 42 |
| Sulfat Gew.% | | | 4,5 |
| Sulfit Gew.% | | | 0,3 |
| Sre.unlösl.Ant.Gew.% | | | 0,6 |
| Glührückstand Gew.% | | | 90 |
| Erdalkalien Gew.% | | | 31 |
| Eisen | | | pos. |

**Patentansprüche**

1. Rauchgasentgiftungsanlage, insbesondere zur Entgiftung von Rauchgasen aus Feuerungen für Heizzwecke, in Form eines Kreislaufsystems, umfassend

a) einen Aufbereitungsteil (1) für die Waschlösung,

b) eine Rauchgaswaschzone (3),

c) eine Zuleitung (2) mit Fördereinrichtung vom Aufbereitungsteil zur Rauchwaschzone, sowie

d) eine Rückleitung (4) von der Rauchwaschzone zum Aufbereitungsteil, wobei eine wässrige Lösung von Ca(OH)$_2$ als Waschlösung verwendet wird und im Aufbereitungsteil ein Kessel (5) zur Regenerierung der verbrauchten Ca(OH)$_2$-Lauge, ein Vorratsgefäss (6) für gebrannten Kalk CaO mit einer Dosierungseinrichtung (12) für die Zuführung des CaO in den Kessel (5) und eine Auffangwanne (7) für den Schlamm, aus dem sich kontinuierlich bildenden schwer löslichen Niederschlag, einschliesslich einer Ablassleitung (8) mit Ventil (18) für den gebildeten Schlamm vorgesehen sind, dadurch gekennzeichnet, dass sich die Rauchwaschzone (3) im oberen Teil des Kamins (28) befindet, und dass der Kamin (28) über ein Rohr (29) in der Austrittsöffnung des Kamins (28) in diese Zone hineinführt und das Rohr (29) mit einer Sprühhaube (25) versehen ist, wobei die Rauchgase ungehindert in die Rauchwaschzone eintreten können, oberhalb der Sprühhaube mindestens eine Austrittsdüse (24) für die $Ca(OH)_2$-Waschlösung angeordnet ist, die so ausgebildet ist, dass beim Sprühbetrieb das austretende Rauchgas möglichst vollständig mit der Flüssigkeit in Kontakt gebracht wird und unten in der Rauchwaschzone, rund um das Rohr (29) eine Wanne (27) zum Auffangen der versprühten Waschlösung angeordnet ist, von welcher die Rückflüssleitung (4) wiederum zum Aufbereitungsteil (1) zurückführt, wobei die Leitung (4) eine genügende Weite aufweist, damit die verbrauchte Waschlösung mit Luftsauerstoff in Berührung kommen kann.

2. Rauchgasentgiftungsanlage nach Anspruch 1, dadurch gekennzeichnet, dass in der Rauchwaschzone (3) oberhalb der Sprühdüsen (24) mindestens ein Gitter aus Eisen vorhanden ist.

3. Rauchgasentgiftungsanlage nach Anspruch 1 oder 2, dadurch gekennzeichnet, dass der Kessel zur Aufbereitung der Waschlösung eine Kühlwendel (15) enthält, welche zur Ableitung bzw. Rückführung der Wärme dient, welche teils bei der Reaktion des CaO im wässrigen Medium entsteht und welche teils durch die warme Kaminabluft auf die Waschlösung übertragen wird.

4. Rauchgasentgiftungsanlage nach Anspruch 3, dadurch gekennzeichnet, dass die Kühlwendel gleichzeitig einen Vorlauf für einen Boiler oder eine Wärmepumpe darstellt.

5. Rauchgasentgiftungsanlage nach einem der Ansprüche 1 - 4, dadurch gekennzeichnet, dass der Aufbereitungsteil Mischbleche (14) enthält.

6. Rauchgasentgiftungsanlage nach einem der Ansprüche 1 - 5, dadurch gekennzeichnet, dass der Kessel (5) eine pH-Sonde (17) aufweist für die Steuerung der Zuführung des CaO vom Vorratsgefäss (6) in den Kessel (5).

7. Rauchgasentgiftungsanlage nach einem der Ansprüche 1 - 6, dadurch gekennzeichnet, dass die Auffangwanne (7) des Aufbereitungsteils (1) mit einem Ablassventil (8) versehen ist, welches durch eine Dichtemesssonde (16) im unteren Teil des Kessels gesteuert wird.

8. Rauchgasentgiftungsanlage nach einem der Ansprüche 1 - 7, dadurch gekennzeichnet, dass die Rauchwaschzone überdach angeordnet ist.

9. Rauchgasentgiftungsanlage nach einem der Ansprüche 1 - 8, dadurch gekennzeichnet, dass im Kessel (5) ein Schwimmerventil (10) für die Steuerung der Zuleitung (11) von Frischwasser angeordnet ist.

## Claims

1. Flue gas detoxification unit, in particular for detoxifying flue gases from furnaces for heating purposes, in the form of a circulating system, comprising
   a) a reprocessing section (1) for the scrubbing solution,
   b) a flue gas scrubbing zone (3),
   c) a feed line (2) with a delivery device from the reprocessing section to the flue gas scrubbing zone, and
   d) a return line (4) from the flue gas scrubbing zone to the reprocessing section,
   an aqueous solution of $Ca(OH)_2$ being used as scrubbing solution, and a vessel (5) for regenerating the spent $Ca(OH)_2$ liquor, a stock vessel (6) for burnt lime CaO with a metering device (12) for feeding the CaO into the vessel (5), and a receiving trough (7) for the sludge of the continuously forming, sparingly soluble precipitate, including a blow-down line (8) with a valve (18) for the sludge formed, being provided in the reprocessing section,
   characterised in that the flue gas scrubbing zone (3) is located in the upper part of the stack (28), and that the stack (28) leads via a pipe (29) in the outlet opening of the stack (28) into this zone and the pipe (29) is provided with a spray hood (25), the flue gases being able to enter the flue gas scrubbing zone without hindrance, at least one outlet nozzle (24) for the $Ca(OH)_2$ scrubbing solution being located above the spray hood and being designed in such a way that, during spray operation, the emerging flue gas is contacted as completely as possible with the liquid, and a trough (27) for collecting the sprayed

5

EP 0 252 132 B1

scrubbing solution being located all around the pipe (29) at the bottom of the flue gas scrubbing zone, from which trough the return line (4) in turn leads back to the reprocessing section (1), the line (4) having a width sufficient for contacting the spent scrubbing solution with atmospheric oxygen.

2. Flue gas detoxification unit according to Claim 1, characterised in that at least one iron grid is provided in the flue gas scrubbing zone (3) above the spray nozzles (24).

3. Flue gas detoxification unit according to Claim 1 or 2, characterised in that the vessel for reprocessing the scrubbing solution contains a cooling coil (15) which serves for removing or returning the heat which in part is evolved in the reaction of the CaO in the aqueous medium and in part is transferred by the warm stack exit air to the scrubbing solution.

4. Flue gas detoxification unit according to Claim 3, characterised in that the cooling coil at the same time represents an upstream part of a boiler or heat pump.

5. Flue gas detoxification unit according to one of Claims 1 - 4, characterised in that the reprocessing section contains mixing plates (14).

6. Flue gas detoxification unit according to one of Claims 1 - 5, characterised in that the vessel (5) contains a pH probe (17) for controlling the CaO feed from the stock vessel (6) into the vessel (5).

7. Flue gas detoxification unit according to one of Claims 1 - 6, characterised in that the receiving trough (7) of the reprocessing section (1) is provided with an outlet valve (8) which is controlled by a density-measuring probe (16) in the lower part of the vessel.

8. Flue gas detoxification unit according to one of Claims 1 - 7, characterised in that the flue gas scrubbing zone is located above the roof.

9. Flue gas detoxification unit according to one of Claims 1 - 8, characterised in that a float valve (10) for controlling the feed (11) of fresh water is provided in the vessel (5).

**Revendications**

1. Installation d'épuration de gaz de fumée, notamment pour l'épuration de gaz de fumée de foyers de chauffage, se présentant sous la forme d'un circuit et comprenant
    a) une partie de préparation (1) de la solution de lavage,
    b) une zone de lavage de gaz de fumée (3),
    c) une conduite d'arrivée (2) comportant un dispositif de mise en circulation et menant de la partie de préparation à la zone de lavage, et
    d) une conduite de retour (4) menant de la zone de lavage à la zone de préparation,
    une solution aqueuse de $Ca(OH)_2$ étant utilisée comme solution de lavage et la partie préparation comportant une cuve (5) de régénération de la lessive de $Ca(OH)_2$ utilisée, un réservoir (6) de chaux calcinée CaO muni d'un dispositif de dosage (12) pour l'introduction de la CaO dans la cuve (5), une cuve collectrice (7) pour la boue formée en continu à partir du précipité peu soluble ainsi qu'une conduite d'évacuation (18) munie d'une vanne (8) pour l'évacuation de la boue formée, caractérisée par le fait que la zone de lavage de gaz de fumée (3) est située dans la partie supérieure de la cheminée (28), que la cheminée entre dans cette zone par l'intermédiaire d'un tube (29) engagé dans la sortie de la cheminée (28) et que le tube (29) est muni d'une coiffe de pulvérisation (25), les gaz de fumée entrant librement dans la zone de lavage de gaz de fumée, au moins une buse de sortie (24) de la solution de lavage à base de $Ca(OH)_2$ étant disposée au-dessus de la coiffe de pulvérisation, laquelle buse est agencée de manière telle que, lors de la pulvérisation, le gaz de fumée soit amené en contact aussi parfait que possible avec le liquide, une cuve (27), à partir de laquelle la conduite de retour (4) mène à la partie préparation (1), étant disposée tout autour du tube (29), dans la partie inférieure de la zone de lavage de gaz de fumée, pour recueillir la solution de lavage pulvérisée, la conduite (4) ayant une section suffisante pour permettre le contact de la solution de lavage utilisée avec l'oxygène de l'air.

2. Installation de lavage de gaz de fumée selon la revendication 1, caractérisée par le fait qu'au mois une

6

grille en fer est disposée dans la zone de lavage de gaz de fumée (3), au-dessus des buse de pulvérisation (24).

3. Installation de lavage de gaz de fumée selon la revendication 1 ou 2, caractérisée par le fait que la cuve de préparation de la solution de lavage contient un serpentin de refroidissement (15) qui sert à évacuer, voire à récupérer la chaleur en partie produite par la réaction de la CaO dans le milieu aqueux et en partie transmise à la solution de lavage par les gaz chauds de la cheminée.

4. Installation de lavage de gaz de fumée selon la revendication 3, caractérisée par le fait que le serpentin de refroidissement constitue simultanément une alimentation d'une chaudière ou d'une pompe à chaleur.

5. Installation de lavage de gaz de fumée selon l'une des revendications 1 à 4, caractérisée par le fait que la partie de préparation contient des tôles mélangeuses (14).

6. Installation de lavage de gaz de fumée selon l'une des revendications 1 à 5, caractérisée par le fait que la cuve (5) comporte une sonde de pH (17) qui commande l'admission dans la cuve (5) de CaO provenant du réservoir (6).

7. Installation de lavage de gaz de fumée selon l'une des revendications 1 à 6, caractérisée par le fait que la cuve collectrice (7) de la partie de préparation (1) est munie d'une vanne d'évacuation (8) qui est commandée par une sonde de mesure de densité (16) disposée dans la partie inférieure de la cuve.

8. Installation de lavage de gaz de fumée selon l'une des revendications 1 à 7, caractérisée par le fait que la zone de lavage est située sur le toit.

9. Installation de lavage de gaz de fumée selon l'une des revendications 1 à 8, caractérisée par le fait qu'une vanne à flotteur (10) qui commande l'arrivée (11) d'eau fraîche est prévue dans la cuve (5).